# EUROPEAN PATENT APPLICATION

(11) **EP 4 443 697 A1**
(43) Date of publication of application: **09.10.2024**
(21) Application number: 24160485.9
(22) Date of filing: 29.02.2024
(51) Int. Cl.: H02J 7/00

(54) **BATTERY MODULE AND METHOD OF OPERATING THE SAME**

(30) Priority: 27.03.2023 KR 20230040053; 20.06.2023 KR 20230078921
(71) Applicant: Samsung SDI Co., Ltd., Yongin-si, Gyeonggi-do 17084 (KR)
(72) Inventor: Ko, Jeonghyup, Yongin-si, Gyeonggi-do 17084 (KR); Sim, Sangbong, Yongin-si, Gyeonggi-do 17084 (KR)
(74) Representative: Gulde & Partner

(57) **Abstract**

A battery module (100) according to one or more embodiments includes a battery (110) including battery cells (C₁ to Cₙ), balancing resistors (Rb) respectively connected to the battery cells (C₁ to Cₙ), balancing switches (SWb) respectively connected to the battery cells (C₁ to Cₙ) and to the balancing resistors (Rb), and an analog front end, AFE, (120) configured to perform cell balancing on the battery cells (C₁ to Cₙ) by controlling the balancing switches (SWb), receive a stand-alone aging command including an aging duty value and an aging-duration-setting value from a first battery management device (200), control the balancing switches (SWb) according to the aging duty value during an aging duration, and turn off all of the balancing switches (SWb) in a shutdown mode upon expiration of the aging duration.

## Description

### BACKGROUND

### 1. Field

One or more embodiments relate to a battery module capable of performing stand-alone aging, and a method of operating the battery module.

### 2. Description of the Related Art

Secondary batteries having electrical characteristics, such as high energy density or the like, are widely used in energy storage systems, electric vehicles (EVs), hybrid electric vehicles (HEVs), or the like in the form of a battery pack.

A battery pack includes battery modules and a battery management device. The battery modules include a battery and an analog front end (AFE), and the battery management device may manage the battery through the AFE. Once the battery modules are produced, the battery modules may be delivered without additional aging, or may be delivered after only some samples of the battery modules undergo aging for a short time. Delivered battery modules are then assembled into battery packs together with battery management devices, and are installed in energy storage systems or the like.

If aging is skipped, a fault may occur in a battery module after the battery module is driven for an amount of time, even if a fault does not occur once the battery module is initially installed. A facility and space may be suitable to perform aging on all of the produced battery modules for a significant time, and the aging itself may suitably use a significant time.

For a method of performing aging by forcibly operating an AFE after producing battery modules, module voltages, and charge states of the battery modules may vary because the battery modules have different periods of time from production to installation. Furthermore, the installation time may increase because assembly is suitably started after equalizing module voltages.

### SUMMARY

One or more embodiments include a battery module capable of performing stand-alone aging after being produced so as to suitably identify a faulty battery module at the time of installation, and a method of operating the battery module.

Additional aspects will be set forth in part in the description that follows and, in part, will be apparent from the description, or may be learned by practice of the presented embodiments of the present disclosure.

According to an aspect of one or more embodiments, a battery module includes a battery including battery cells, balancing resistors respectively connected to the battery cells, balancing switches respectively connected to the battery cells and to the balancing resistors, and an analog front end configured to perform cell balancing on the battery cells by controlling the balancing switches, receive a stand-alone aging command including an aging duty value and an aging-duration-setting value from a first battery management device, control the balancing switches according to the aging duty value during an aging duration, and turn off all of the balancing switches in a shutdown mode upon expiration of the aging duration.

The analog front end may be further configured to repeat, during the aging duration, a process of turning on the balancing switches for a turn-on time, and turning off the balancing switches for a turn-off time, according to the aging duty value.

The analog front end may be further configured to control the balancing switches such that some of the balancing switches differ in a turn-on timing from other balancing switches during the aging duration.

The analog front end may be further configured to control the balancing switches such that the balancing switches start to be turned on sequentially in a corresponding order during the aging duration.

The balancing switches may include first balancing switches and second balancing switches alternately arranged, wherein the analog front end may be further configured to repeat, during the aging duration, a process of concurrently turning on the first balancing switches for a turn-on time, concurrently turning off the first balancing switches for a turn-off time, concurrently turning on the second balancing switches for the turn-on time, and concurrently or substantially simultaneously turning off the second balancing switches for the turn-off time, according to the aging duty value.

The analog front end may be further configured to transmit, upon detection of a connection of a second battery management device, the aging duty value and the aging-duration-setting value in the stand-alone aging command, and/or a cell voltage value of the battery cells, to the second battery management device.

The analog front end may be further configured to end stand-alone aging upon detection of a connection of a second battery management device.

The battery cells may be respectively connected in parallel to the balancing resistors through the balancing switches.

The analog front end may include the balancing switches, a balancing control circuit configured to control the balancing switches, and a controller configured to receive the stand-alone aging command from the first battery management device, to perform stand-alone aging during the aging duration using the balancing control circuit, and to operate in the shutdown mode upon expiration of the aging duration.

According to another aspect of one or more embodiments, provided is a method of operating a battery module including a battery including battery cells, balancing resistors and balancing switches respectively connected to the battery cells, and an analog front end configured to control the balancing switches, the method including receiving a stand-alone aging command including an aging duty value and an aging-duration-setting value from a first battery management device, controlling the balancing switches according to the aging duty value during an aging duration, and turning off all of the balancing switches and operating in a shutdown mode upon expiration of the aging duration.

The method may further include detecting connection of a second battery management device, detecting a cell voltage of the battery cells, and transmitting, to the second battery management device, the aging duty value and the aging-duration-setting value in the stand-alone aging command and a cell voltage value of the battery cells.

The method may further include repeating, during the aging duration, a process of turning on the balancing switches for a turn-on time, and turning off the balancing switches for a turn-off time, according to the aging duty value.

The method may further include controlling the balancing switches such that some of the balancing switches differ in a turn-on timing from other balancing switches during the aging duration.

The method may further include controlling the balancing switches such that the balancing switches start to be turned on sequentially in a corresponding order during the aging duration.

The method may further include transmitting, upon detection of a connection of a second battery management device, the aging duty value and the aging-duration-setting value in the stand-alone aging command, and/or a cell voltage value of the battery cells, to the second battery management device.

The method may further include ending stand-alone aging upon detection of a connection of a second battery management device.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other aspects of embodiments of the present disclosure will be more apparent from the following description taken in conjunction with the accompanying drawings, in which:
FIG. 1 schematically illustrates a battery module according to one or more embodiments;
FIG. 2 illustrates a battery module according to one or more embodiments;
FIG. 3 illustrates a balancing circuit of a battery module according to one or more embodiments; and
FIG. 4 is a flowchart of a method of operating a battery module, according to one or more embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

It will be understood that when an element, layer, region, or component is referred to as being "connected to," or "(operatively or communicatively) coupled to," another element, layer, region, or component, it can be directly connected to, or coupled to, the other element, layer, region, or component, or indirectly connected to, or coupled to, the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled" refers to one component directly connecting or coupling another component, or being on another component, without an intermediate component. Other expressions describing relationships between components such as "between," "immediately between" or "adjacent to" and "directly adjacent to" may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Some embodiments are described in the accompanying drawings in relation to functional block, unit, and/or module. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

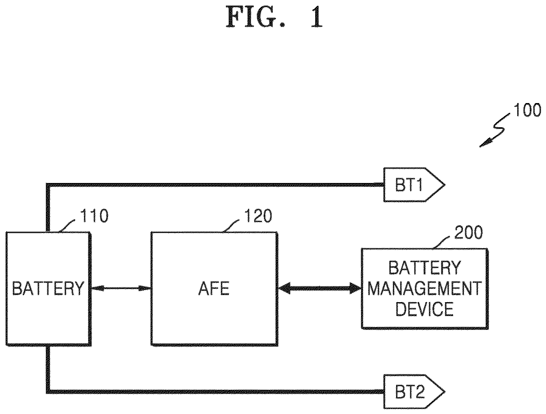

FIG. 1 schematically illustrates a battery module according to one or more embodiments.

Referring to FIG. 1, a battery module 100 includes a battery 110 connected between first and second block terminals BT1 and BT2, and an analog front end (AFE) 120 that monitors the battery. The AFE 120 may perform data communication with a battery management device 200.

The battery management device 200 may include a micro control unit (MCU). The battery management device 200 may manage a plurality of battery modules 100. The battery management device 200 may collect state information about the battery 110 from the AFE 120, and may perform a protection operation suitable for a state of the battery 110. The battery management device 200 may be referred to as a rack battery management system (BMS). The AFE 120 may be referred to as a module BMS.

The battery 110 may include a plurality of battery cells, which may have been immediately produced (e.g., may have been produced recently). A battery cell immediately following production may have a cell voltage of a corresponding level (e.g., a preset level, such as 3.6 V). The battery 110 may be assembled into the battery module 100 together with the AFE 120.

According to one or more embodiments, if the battery module 100 is assembled, the AFE 120 may temporarily establish data communication with the battery management device 200. The AFE 120 may receive a stand-alone aging command from the battery management device 200, and may perform stand-alone aging on the battery module 100 according to the stand-alone aging command. The AFE 120 may be separated from the battery management device 200 while performing stand-alone aging. The battery module 100 may be delivered to a delivery destination even in a state in which stand-alone aging is being performed.

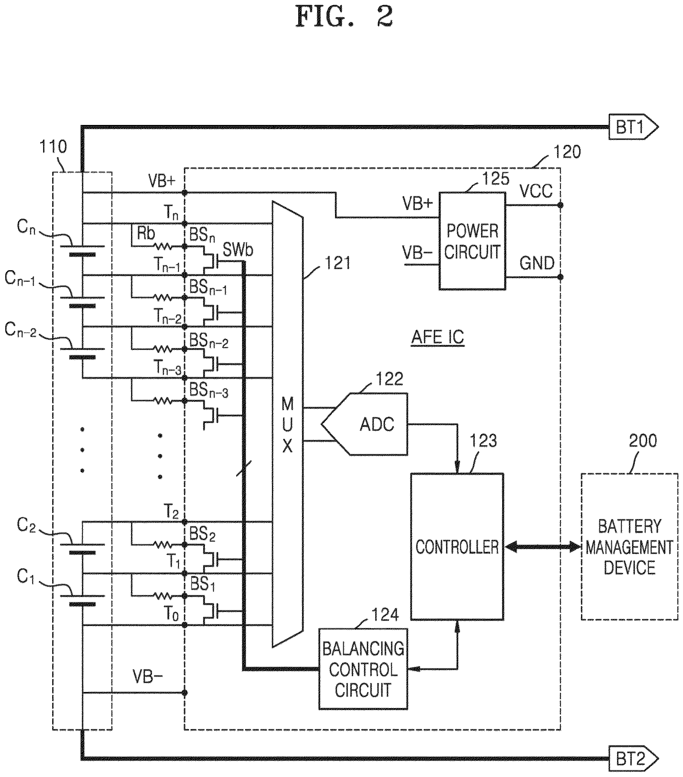

FIG. 2 illustrates a battery module according to one or more embodiments.

Referring to FIG. 2, the battery module 100 includes the battery 110 having a plurality of battery cells C₁ to Cₙ, a plurality of balancing resistors Rb, a plurality of balancing switches SWb, and the AFE 120. The AFE 120 may perform data communication with the battery management device 200.

The plurality of balancing resistors Rb are respectively connected to the plurality of battery cells C₁ to Cₙ. The plurality of balancing switches SWb are respectively connected to the plurality of battery cells C₁ to Cₙ and to the plurality of balancing resistors Rb. The AFE 120 performs cell balancing on the plurality of battery cells C₁ to Cₙ by controlling each of the plurality of balancing switches SWb.

The battery cells C₁ to Cₙ are connected in series between the first and second block terminals BT1 and BT2. The battery cells C₁ to Cₙ each are connected in parallel to a corresponding balancing resistor through a corresponding balancing switch. For example, the first battery cell C₁ is connected in parallel to the first balancing resistor Rb corresponding to the first battery cell C₁ through the first balancing switch SWb corresponding to the first battery cell C₁. If the first balancing switch SWb is turned on, the first battery cell C₁ is discharged by the first balancing resistor Rb.

The battery cells C₁ to Cₙ each may be a rechargeable secondary battery as a portion for storing power. For example, the battery cells C₁ to Cₙ may include at least one selected from the group consisting of a lithium ion battery, a lithium polymer battery, a nickel cadmium battery, a nickel metal hydride (Ni-MH) battery, a nickel-zinc (Ni-Zn) battery, or a lead storage battery.

The number and connection configuration of the battery cells C₁ to Cₙ, and/or the number and connection configuration of the batteries 110, may be determined according to a suitable output voltage and power storage capacity for the battery module 100.

The AFE 120 may monitor a cell voltage, a temperature, etc. of the battery cells C₁ to Cₙ in the battery 110. The AFE 120 may perform cell balancing for equalizing cell voltages of the battery cells C₁ to Cₙ in the battery 110.

The AFE 120 may receive a stand-alone aging command from the battery management device 200. If the battery module 100 constitutes a battery pack together with the battery management device 200, the AFE 120 may transmit to the battery management device 200 state data of the battery 110 that is obtained through monitoring.

The battery management device 200 that has transmitted the stand-alone aging command to the AFE 120, and that is temporarily connected to the battery module 100 shortly after being produced, may be referred to as a first battery management device. The battery management device 200 that receives the state data of the battery 110 from the AFE 120, and that constitutes a battery pack together with the battery module 100, may be referred to as a second battery management device. The first battery management device 200 and the second battery management device 200 may be different from each other.

The AFE 120 may include one AFE integrated circuit (IC). The AFE IC may include battery pins T₀ to Tₙ. The battery cells C₁ to Cₙ may be connected between the battery pins T₀ to Tₙ, respectively. For example, the first battery cell C₁ may be connected between the battery pins T₀ and T₁.

The AFE IC may include a multiplexer (MUX) 121. The MUX 121 may select two adjacent battery pins from among the battery pins T₀ to Tₙ. The MUX 121 may select two battery pins connected to any one battery cell among the battery cells C₁ to Cₙ.

The AFE IC may include an analog-to-digital converter (ADC) 122. The ADC 122 may convert a voltage between two battery pins, which may be selected by the MUX 121, into a digital value. The ADC 122 may convert, into a digital value, a cell voltage of a battery cell selected by the MUX 121 from among the battery cells C₁ to Cₙ.

The AFE IC may include a controller 123. The controller 123 may receive a digital value output from the ADC 122. The controller 123 may control the MUX 121 to sequentially select the battery cells C₁ to Cₙ one by one, and may receive digital values output from the ADC 122 in synchronization with the selection by the MUX 121, thereby collecting all of the cell voltages of the battery cells C₁ to Cₙ.

The AFE IC may include a plurality of balancing pins BS₁ to BSₙ. The balancing pins BS₁ to BSₙ may respectively correspond to the battery cells C₁ to Cₙ. In one or more other embodiments, the AFE IC may further include a balancing pin BS₀, and the battery cells C₁ to Cₙ may be collectively connected between the balancing pins BS₀ to BSₙ.

The AFE 120 may include the plurality of balancing resistors Rb respectively connected to the balancing pins BS₁ to BSₙ and the battery pins T₁ to Tₙ. For example, as illustrated in FIG. 2, the balancing resistor Rb may be connected between the balancing pin BS₁ and the battery pin T₁. The balancing resistor Rb corresponding to the n-th battery cell Cₙ may be connected between the balancing pin BSₙ and the battery pin Tₙ.

The AFE 120 may include the plurality of balancing switches SWb respectively connected to the balancing pins BS₁ to BSₙ and the battery pins T₀ to Tₙ₋₁. For example, as illustrated in FIG. 2, the balancing switch SWb corresponding to the first battery cell C₁ may be connected between the balancing pin BS₁ and the battery pin T₀. The balancing switch SWb corresponding to the n-th battery cell Cₙ may be connected between the balancing pin BSₙ and the battery pin Tₙ₋₁. The plurality of balancing switches SWb may be included in the AFE IC.

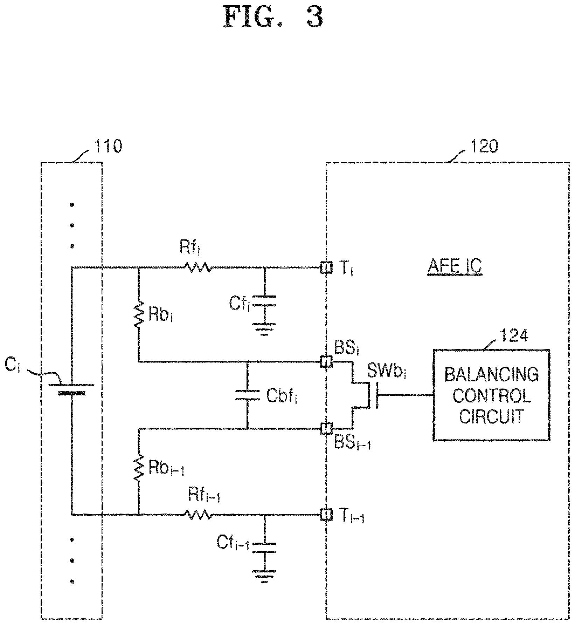

The balancing resistor Rb and the balancing switch SWb will be described in more detail with reference to FIG. 3.

The AFE IC may include a balancing control circuit 124. The balancing control circuit 124 may control the balancing switches SWb according to control by the controller 123. The controller 123 may determine a battery cell that suitably uses cell balancing among the battery cells C₁ to Cₙ according to a corresponding cell-balancing criterion (e.g., a preset cell-balancing criterion). The controller 123 may control the balancing control circuit 124 to perform cell balancing on the above battery cell, and the balancing control circuit 124 may turn on the balancing switch SWb corresponding to the above battery cell. Power stored in the above battery cell may be consumed through the balancing resistor Rb connected to the above balancing switch SWb so that a cell voltage of the above battery cell may reduce.

The AFE IC may include a pair of input voltage pins VB+ and VB-. The pair of input voltage pins VB+ and VB- may be respectively connected to a positive electrode and negative electrode of the battery 110, and may be applied with a module voltage of the battery 110. The pair of input voltage pins VB+ and VB- may be respectively connected to the first and second block terminals BT1 and BT2.

The AFE 120 may include a power circuit 125 that generates a driving voltage Vcc for driving the AFE 120 from a module voltage input through the input voltage pins VB+ and VB- . The power circuit 125 may include a DC-DC converter circuit. Although the power circuit 125 is illustrated as being mounted in the AFE IC, the power circuit 125 may be arranged outside the AFE IC, and the driving voltage Vcc generated by the power circuit 125 may be supplied to the AFE IC.

The AFE IC may include a pair of output voltage pins VCC and GND. The pair of output voltage pins VCC and GND may output, to the outside, the driving voltage Vcc generated by the power circuit 125.

The AFE IC may include a general purpose input/output pin GPIO, wherein the general purpose input/output pin GPIO may be connected to, for example, a temperature sensor, and an analog-temperature-sensing signal may be input to the controller 123 through the general purpose input/output pin GPIO.

FIG. 3 illustrates a balancing circuit of a battery module according to one or more embodiments.

Referring to FIG. 3, an i-th battery cell Cᵢ, and an i-th balancing resistor Rbᵢ and i-th balancing switch SWbᵢ corresponding to the i-th battery cell Cᵢ, are disclosed.

A positive electrode of the i-th battery cell Cᵢ is connected to an i-th battery terminal Tᵢ through an i-th filtering resistor Rfᵢ. An i-th filtering capacitor Cfᵢ is connected to the i-th battery terminal Tᵢ. A negative electrode of the i-th battery cell Cᵢ is connected to a positive electrode of an i-1-th battery cell Cᵢ₋₁, and is connected to an i-1-th battery terminal Tᵢ₋₁ through an i-1-th filtering resistor Rfᵢ₋₁. An i-1-th filtering capacitor Cfᵢ₋₁ is connected to the i-1-th battery terminal Tᵢ₋₁.

The i-1-th filtering resistor Rfᵢ₋₁, the i-1-th filtering capacitor Cfᵢ₋₁, the i-th filtering resistor Rfᵢ, and the i-th filtering capacitor Cfᵢ may make it possible to accurately and stably sense a cell voltage of the i-th battery cell Cᵢ by filtering external noise.

The positive electrode of the i-th battery cell Cᵢ is connected to an i-th balancing terminal BSᵢ through an i-th balancing resistor Rbᵢ. The negative electrode of the i-th battery cell Cᵢ is connected to an i-1-th balancing terminal BSᵢ₋₁ through an i-1-th balancing resistor Rbᵢ₋₁. An i-th balancing switch SWbᵢ is connected between the i-1-th balancing terminal BSᵢ₋₁ and the i-th balancing terminal BSᵢ. The i-th balancing switch SWbᵢ may be included in the AFE IC, and may be controlled by the balancing control circuit 124. An i-th balancing filtering capacitor Cbfᵢ may be connected between the i-1-th balancing terminal BSᵢ₋₁ and the i-th balancing terminal BSᵢ to filter external noise.

The i-1-th filtering resistor Rfᵢ₋₁, the i-1-th filtering capacitor Cfᵢ₋₁, the i-th filtering resistor Rfᵢ, the i-th filtering capacitor Cfᵢ, the i-1-th balancing resistor Rbᵢ₋₁, the i-th balancing resistor Rbᵢ, and/or the i-th balancing filtering capacitor Cbfᵢ may be mounted on a printed circuit board on which the AFE IC is mounted during assembly of the battery module 100.

The i-th filtering capacitor Cfᵢ, the i-th filtering capacitor Cfᵢ, and the i-th balancing filtering capacitor Cbfᵢ may be vulnerable to mechanical or thermal shock due to characteristics thereof, and thus may function normally at the initial installation, but may exhibit a faulty phenomenon while operating as a battery pack. Therefore, aging is suitably implemented for the battery module 100.

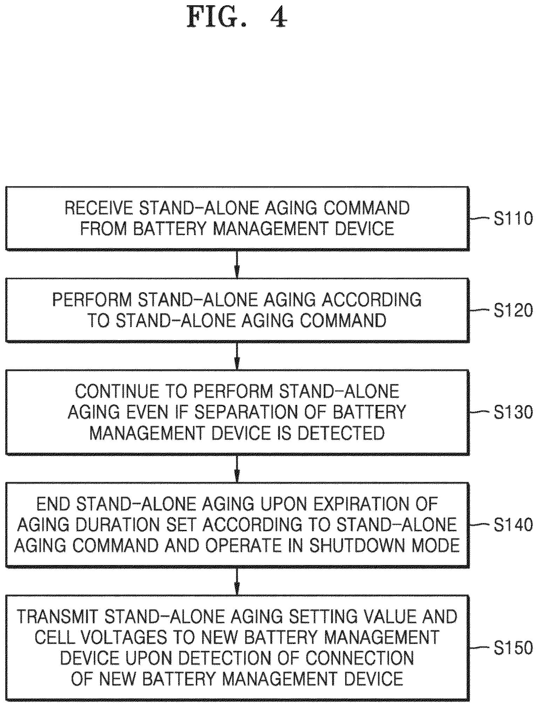

FIG. 4 is a flowchart of a method of operating a battery module, according to one or more embodiments.

Referring to FIG. 4 together with FIGS. 1 to 3, the AFE 120 receives a stand-alone aging command from the battery management device 200 (S110). The stand-alone aging command includes an aging duty value and an aging-duration-setting value.

The aging duty value is a ratio of time, or a percentage of time, during which the balancing switch SWb is turned on during one period of time. One period may be, for example, one minute. If the aging duty value is 25 %, the balancing switch SWb may be turned off for 45 seconds after being turned on for 15 seconds.

According to some embodiments, if odd-numbered balancing switches SWb and even-numbered balancing switches SWb are alternately operated, the odd-numbered balancing switches SWb may be turned off for 30 seconds after being turned on for 30 seconds if the aging duty value is 50 %. At this time, the even-numbered balancing switches SWb may be turned off. Thereafter, the even-numbered balancing switches SWb may be turned off for 30 seconds after being turned on for 30 seconds. At this time, the odd-numbered balancing switches SWb may also be turned off. Therefore, if the aging duty value is 50 %, the balancing switches SWb may be turned off for 90 seconds after being turned on for 30 seconds.

As an amount of discharge through the balancing resistor Rb increases (as the aging duty value increases), heat generated in the balancing resistor Rb also may increase. The aging duty value may be set so that a temperature of the battery 110 does not exceed a high-temperature reference value.

The aging-duration-setting value is a value for describing a duration during which stand-alone aging is performed. For example, the aging-duration-setting value may be set to 4 hours, 8 hours, 10 hours, etc. For example, if the aging-duration-setting value is 8 hours and the aging duty value is 25 %, an accumulated time during which each of the battery cells C₁ to Cₙ of the battery 110 is actually discharged is 2 hours. According to an example, if odd-numbered balancing switches SWb and even-numbered balancing switches SWb are alternately operated, an accumulated time during which each of the battery cells C₁ to Cₙ is actually discharged is 1 hour.

The AFE 120 performs stand-alone aging according to the stand-alone aging command (S120). The AFE 120 controls the plurality of balancing switches SWb according to the aging duty value during an aging duration of the stand-alone aging command.

According to some embodiments, during the aging duration, the AFE 120 may repeat a process of turning on the balancing switches SWb (for a turn-on time according to the aging duty value) and turning off the balancing switches SWb (for a turn-off time according to the aging duty value). If the aging duration is 8 hours, if an aging periodic time, or aging time period, is 1 minute, and if the aging duty value is 25 %, the turn-on time is 15 seconds, and the turn-off time is 45 seconds. In some embodiments, the AFE 120 repeats, for 8 hours, an operation of turning on the balancing switches SWb for 15 seconds and turning off the balancing switches SWb for 45 seconds.

According to an example, some of the balancing switches SWb may differ in turn-on timing from other balancing switches SWb during the aging duration. For example, the odd-numbered balancing switches SWb may be concurrently or substantially simultaneously turned on at every 0 seconds (e.g., at the beginning of each 1-minute time period), and the even-numbered balancing switches SWb may be concurrently or substantially simultaneously turned on at every 30 seconds (e.g., at the halfway point of each 1-minute time period). According to another example, the balancing switches SWb of a first group may be concurrently or substantially simultaneously turned on at every 0 seconds (e.g., at the beginning of each 1-minute time period), the balancing switches SWb of a second group may be concurrently or substantially simultaneously turned on at every 20 seconds (e.g., at the one-third point of each 1-minute time period), and the balancing switches SWb of a third group may be concurrently or substantially simultaneously turned on at every 40 seconds (e.g., at the two-thirds point of each 1-minute time period).

According to another example, the balancing switches SWb may start to be turned on sequentially in a corresponding order (e.g., a preset order) during the aging duration. For example, if the number of the balancing switches SWb is 12, stand-alone aging may be performed in such a manner that a first balancing switch SWb₁ is turned on at the 0-second mark of each 1-minute time period, a seventh balancing switch SWb₇ is turned on at the 5-second mark of each 1-minute time period, a second balancing switch SWb₂ is turned on at the 10-second mark of each 1-minute time period, and an eighth balancing switch SWb₈ may be turned on at the 15-second mark of each 1-minute time period.

According to some other embodiments, during the aging duration, the AFE 120 may repeat a process of concurrently or substantially simultaneously turning on the odd-numbered balancing switches SWb for a turn-on time according to the aging duty value, concurrently or substantially simultaneously turning off the odd-numbered balancing switches SWb for a turn-off time according to the aging duty value, concurrently or substantially simultaneously turning on the even-numbered balancing switches SWb for the turn-on time, and concurrently or substantially simultaneously turning off the even-numbered balancing switches SWb for the turn-off time. The odd-numbered balancing switches SWb may be referred to as first balancing switches SWb, and the even-numbered balancing switches SWb may be referred to as second balancing switches SWb.

For example, if the aging duration is 8 hours, if the aging periodic time is 1 minute, and if the aging duty value is 25 %, the turn-on time is 15 seconds, and the turn-off time is 45 seconds. In some embodiments, the AFE 120 may repeat, for 8 hours, an operation of turning on the first balancing switches SWb for 15 seconds, turning off the first balancing switches SWb for 45 seconds, turning on the second balancing switches SWb for 15 seconds, and turning off the second balancing switches SWb for 45 seconds. The first and second balancing switches SWb are all turned on for 15 seconds during two minutes.

After the AFE 120 performs stand-alone aging according to the stand-alone aging command, the battery management device 200 may be separated from the battery module 100. The AFE 120 continues to perform stand-alone aging even if separation of the battery management device 200 is detected (S130).

According to some embodiments, the AFE 120 may end the stand-alone aging if the battery management device 200 is connected while performing the stand-alone aging. The battery management device 200 may be different from the battery management device 200 that has transmitted the stand-alone aging command in operation S110.

If the aging duration set according to the stand-alone aging command has elapsed, the AFE 120 may end the stand-alone aging and may operate in a shutdown mode (S140). The AFE 120 may perform the stand-alone aging during the aging duration set according to the stand-alone aging command, and may end the stand-alone aging if the aging duration expires. The AFE 120 may end the stand-alone aging, and may operate in the shutdown mode. If the AFE 120 operates in the shutdown mode, the AFE 120 consumes a current of only several microamperes. However, if the AFE 120 performs the stand-alone aging, the AFE 120 consumes a current of several milliamperes. As the AFE 120 operates in the shutdown mode after performing the stand-alone aging during the set duration, the module voltage of the battery 110 does not change significantly even if the time from production to installation of the battery module 100 varies.

If the AFE 120 performs the stand-alone aging during the aging duration set according to the stand-alone aging command, an amount of current consumed by the battery cells C₁ to Cₙ due to the stand-alone aging may be calculated. The battery cells C₁ to Cₙ are delivered with a corresponding cell voltage value (e.g., a preset cell voltage value). The cell voltage at the time of delivery may be about 3.6 V. As the cell voltage at the time of delivery may be regarded as an open circuit voltage (OCV), a state of charge (SOC) of the battery cells C₁ to Cₙ at the time of delivery may be estimated using an OCV-SOC relationship of the battery cells C₁ to Cₙ.

The time during which current is actually consumed by the battery cells C₁ to Cₙ may be calculated based on the aging duration and the aging duty.

For example, if the aging-duration-setting value is 8 hours, and if the aging duty value is 25 %, the time during which each of the battery cells C₁ to Cₙ consumes current is 2 hours. According to an example, if odd-numbered balancing switches SWb and even-numbered balancing switches SWb are alternately operated, the battery cells C₁ to Cₙ discharge current for one hour in total.

The cell voltage at the time of delivery is approximately constant, and the magnitude of current that is output from a corresponding battery cell if the balancing switch SWb is turned on may be suitably measured or calculated. A balancing path resistance corresponding to a battery cell may be measured in advance. The balancing path resistance includes a balancing resistance, a linear resistance of a balancing path, and an ON resistance of the balancing switch SWb. As the magnitude of discharge current output from the battery cells C₁ to Cₙ to the balancing resistor Rb may be measured through the balancing path resistance, the total amount of current consumed by the battery cells C₁ to Cₙ during the aging duration may be calculated.

The state of charge of the battery cells C₁ to Cₙ after stand-alone aging may be estimated through the total amount of current consumed during the aging duration, and the OCV after stand-alone aging may also be estimated using the OCV-SOC relationship.

It may be verified whether the battery cells C₁ to Cₙ each have been discharged normally by measuring the cell voltage of each of the battery cells C₁ to Cₙ and by comparing the same with the OCV after stand-alone aging. For example, it may be determined that the battery cells C₁ to Cₙ have been discharged normally if the measured cell voltage of each of the battery cells C₁ to Cₙ differs from the estimated OCV of the battery cells C₁ to Cₙ (e.g., after stand-alone aging) by a corresponding reference value (e.g., a preset reference value) or less.

However, if the measured cell voltage of any one of the battery cells C₁ to Cₙ differs from the estimated OCV of the battery cells C₁ to Cₙ by at least the corresponding reference value after stand-alone aging, it may be determined that a fault has occurred in a filtering capacitor or the like, and a battery pack may be installed after replacing a relevant battery module with another battery module.

Upon detection of connection of a new battery management device, the AFE 120 may transmit the cell voltage and setting values of the stand-alone aging command to the new battery management device (S150).

The battery module 100 that has undergone stand-alone aging may be assembled together with the new battery management device, and may be installed in a battery pack. The AFE 120 may be connected to the new battery management device 200 that is to constitute a battery pack. The AFE 120 may transmit (e.g., to the new battery management device 200) the aging-duration-setting value and duty value of the stand-alone aging command received in operation S110. The battery management device 200 may calculate the estimated OCV after stand-alone aging using the OCV-SOC relationship of the battery cells C₁ to Cₙ.

The AFE 120 may detect the cell voltage of the battery cells C₁ to Cₙ, and may transmit the cell voltage of the battery cells C₁ to Cₙ to the battery management device 200. The battery management device may determine whether the battery module 100 is normal by comparing the cell voltage of each of the battery cells C₁ to Cₙ with the estimated OCV after stand-alone aging.

Implementation examples illustrated and described in the present disclosure are merely examples for description, and are not intended to limit the scope of the embodiments in no way. For conciseness, other functional aspects of conventional electronic configurations, control systems, software and the systems may be omitted. Furthermore, line connections or connection members between elements depicted in the drawings represent functional connections and/or physical or circuit connections by way of example, and in actual applications, they may be replaced or embodied as various additional functional connection, physical connection or circuit connections. In addition, the described elements are not regarded as inevitably required elements unless they are specifically mentioned as being "essential" or "critical."

In describing the embodiments (for example, in the claims), the term "the" and similar demonstrative terms used herein may include both singular and plural references. Also, it should be understood that any numerical range recited herein is intended to include all sub-ranges subsumed therein (unless expressly indicated otherwise) and therefore, the disclosed numeral ranges include every individual value between the minimum and maximum values of the numeral ranges. Finally, operations constituting the method of the present disclosure may be performed in appropriate order unless explicitly described in terms of order or described to the contrary. In other words, the present disclosure is not necessarily limited to the order in which the individual operations are recited. All examples described herein or the terms indicative thereof ("for example," etc.) used herein are merely to describe the present disclosure in greater detail, and, therefore, it should be understood that the scope of the present disclosure is not limited to the example embodiments described above or by the use of such terms unless limited by the appended claims. Also, it should be apparent to those skilled in the art that various alterations, substitutions, and modifications may be made within the scope of the appended claims or equivalents thereof.

According to one or more embodiments, as stand-alone aging may be performed even during delivery of battery modules after the battery modules are produced, a facility, space, and time for performing the stand-alone aging on all of the battery modules are not required.

As the stand-alone aging is performed for a sufficient time, faulty battery modules may be suitably identified if the battery modules are assembled into a battery pack together with battery management devices.

It should be understood that embodiments described herein should be considered in a descriptive sense only and not for purposes of limitation. Descriptions of aspects within each embodiment should typically be considered as available for other similar aspects in other embodiments. While one or more embodiments have been described with reference to the figures, it will be understood by those of ordinary skill in the art that various changes in form and details may be made therein without departing from the scope of the present disclosure as defined by the following claims, with functional equivalents thereof to be included therein.

## Claims

1. A battery module (100) comprising:
a battery (110) comprising battery cells (C₁ to Cₙ);
balancing resistors (Rb) respectively connected to the battery cells (C₁ to Cₙ);
balancing switches (SWb) respectively connected to the battery cells (C₁ to Cₙ) and to the balancing resistors (Rb); and
an analog front end, AFE, (120) configured to:
perform cell balancing on the battery cells (C₁ to Cₙ) by controlling the balancing switches (SWb);
receive a stand-alone aging command comprising an aging duty value and an aging-duration-setting value from a first battery management device (200);
control the balancing switches (SWb) according to the aging duty value during an aging duration; and
turn off all of the balancing switches (SWb) in a shutdown mode upon expiration of the aging duration.

2. The battery module (100) as claimed in claim 1, wherein the AFE (120) is further configured to repeat, during the aging duration, a process of turning on the balancing switches (SWb) for a turn-on time, and turning off the balancing switches (SWb) for a turn-off time, according to the aging duty value.

3. The battery module (100) as claimed in claim 1 or 2, wherein the AFE (120) is further configured to control the balancing switches (SWb) such that some of the balancing switches (SWb) differ in a turn-on timing from other balancing switches (SWb) during the aging duration.

4. The battery module (100) as claimed in any one of the preceding claims, wherein the AFE (120) is further configured to control the balancing switches (SWb) such that the balancing switches (SWb) start to be turned on sequentially in a corresponding order during the aging duration.

5. The battery module (100) as claimed in claim 1, wherein the balancing switches (SWb) comprise first balancing switches (SWb₁) and second balancing switches (SWb₂) alternately arranged, and
wherein the AFE (120) is further configured to repeat, during the aging duration, a process of concurrently turning on the first balancing switches (SWb₁) for a turn-on time, concurrently turning off the first balancing switches (SWb₁) for a turn-off time, concurrently turning on the second balancing switches (SWb₂) for the turn-on time, and concurrently or substantially simultaneously turning off the second balancing switches (SWb₂) for the turn-off time, according to the aging duty value.

6. The battery module (100) as claimed in any one of the preceding claims, wherein the AFE (120) is further configured to transmit, upon detection of a connection of a second battery management device (200), the aging duty value and the aging-duration-setting value in the stand-alone aging command, and a cell voltage value of the battery cells (C₁ to Cₙ), to the second battery management device (200).

7. The battery module (100) as claimed in any one of the preceding claims, wherein the AFE (120) is further configured to end stand-alone aging upon detection of a connection of a second battery management device (200).

8. The battery module (100) as claimed in any one of the preceding claims, wherein the battery cells (C₁ to Cₙ) are respectively connected in parallel to the balancing resistors (Rb) through the balancing switches (SWb).

9. The battery module (100) as claimed in any one of the preceding claims, wherein the AFE (120) comprises:
the balancing switches (SWb);
a balancing control circuit (124) configured to control the balancing switches (SWb); and
a controller (123) configured to receive the stand-alone aging command from the first battery management device (200), to perform stand-alone aging during the aging duration using the balancing control circuit (124), and to operate in the shutdown mode upon expiration of the aging duration.

10. A method of operating a battery module (100) comprising a battery (110) comprising battery cells (C₁ to Cₙ), balancing resistors (Rb) and balancing switches (SWb) respectively connected to the battery cells (C₁ to Cₙ), and an analog front end, AFE, (120) configured to control the balancing switches (SWb), the method comprising:
receiving a stand-alone aging command comprising an aging duty value and an aging-duration-setting value from a first battery management device (200);
controlling the balancing switches (SWb) according to the aging duty value during an aging duration; and
turning off all of the balancing switches (SWb) and operating in a shutdown mode upon expiration of the aging duration.

11. The method as claimed in claim 10, further comprising:
detecting connection of a second battery management device (200);
detecting a cell voltage of the battery cells (C₁ to Cₙ); and
transmitting, to the second battery management device (200), the aging duty value and the aging-duration-setting value in the stand-alone aging command and a cell voltage value of the battery cells (C₁ to Cₙ).

12. The method as claimed in claim 10 or 11, further comprising repeating, during the aging duration, a process of turning on the balancing switches (SWb) for a turn-on time, and turning off the balancing switches (SWb) for a turn-off time, according to the aging duty value.

13. The method as claimed in any one of claims 10 to 12, further comprising controlling the balancing switches (SWb) such that some of the balancing switches (SWb) differ in a turn-on timing from other balancing switches (SWb) during the aging duration.

14. The method as claimed in any one of claims 10 to 13, further comprising controlling the balancing switches (SWb) such that the balancing switches (SWb) start to be turned on sequentially in a corresponding order during the aging duration.

15. The method as claimed in any one of claims 10 to 14, further comprising:
transmitting, upon detection of a connection of a second battery management device (200), the aging duty value and the aging-duration-setting value in the stand-alone aging command, and a cell voltage value of the battery cells (C1 to Cn), to the second battery management device (200); and/or
ending stand-alone aging upon detection of a connection of a second battery management device (200).
